# EUROPEAN PATENT SPECIFICATION

(11) **EP 3 278 951 B1**
(45) Date of publication and mention of the grant of the patent: **12.06.2019**
(21) Application number: 16772670.2
(22) Date of filing: 25.03.2016
(51) Int. Cl.: B29C 47/92, B29C 47/66, B29C 47/08, B29C 47/36

(54) **GEAR PUMP EXTRUDING MACHINE**
ZAHNRADPUMPENEXTRUDER
EXTRUDEUSE AVEC POMPE À ENGRENAGES

(30) Priority: 02.04.2015 JP 2015076127
(43) Date of publication of application: 07.02.2018
(73) Proprietor: Bridgestone Corporation, Tokyo 104-8340 (JP)
(72) Inventor: ISAKA, Yasuhiro, Tokyo 104-8340 (JP)
(74) Representative: Oxley, Robin John George
(86) International application number: PCT/JP2016/059710
(87) International publication number: WO 2016/158789

(56) References cited:
- FR-A1- 2 409 144
- JP-A- S4 713 335
- JP-A- S5 698 145
- JP-A- S55 137 944
- JP-A- 2002 178 392
- JP-B1- S 404 080
- JP-U- S6 440 517

## Description

### TECHNICAL FIELD

The present invention relates to a gear pump extruding machine as a viscous material extruding machine that is provided with a gear pump.

### BACKGROUND ART

A gear pump extruding machine includes a screw feeder in which a screw rotates to feed a rubber material while kneading the same, a gear pump provided at the outlet side of the screw feeder and having a pair of gears for feeding the rubber material at a constant rate, and a die provided at the outlet side of the gear pump, for ejecting the rubber material while shaping the same. The gear pump extruding machine extrudes the rubber material while forming it into the desired profile.

It is known that the rate at which the rubber material is extruded from the die of the gear pump extruding machine is determined by the gear pump extrusion efficiency of the gear pump that delivers the rubber material at the constant rate, and that the gear pump extrusion efficiency is affected by the quality of the rubber material and varies depending on the pressure on the inlet side of the gear pump (the pressure in a fluid communication channel that keeps the screw feeder and the gear pump in fluid communication with each other).

Therefore, when the rate at which the rubber material is extruded is changed, it is customary to adjust the pressure on the inlet side of the gear pump in order to set the gear pump extrusion efficiency to a value for achieving the changed rate at which the rubber material is extruded.

Since the pressure on the inlet side of the gear pump increases as the rotational speed of the screw of the screw feeder increases, it has been proposed to control the rotational speed of the screw of the screw feeder for adjusting the pressure on the inlet side of the gear pump (see, for example, PATENT DOCUMENT 1).

### PRIOR ART DOCUMENT

### PATENT DOCUMENT

[PATENT DOCUMENT 1]
   JP 2002-178392 A
[PATENT DOCUMENT 2]
   JP S64 40517 U

PATENT DOCUMENT 1 discloses a gear pump extruding machine in which a target inlet pressure for the gear pump is preset with respect to the rate at which the rubber material is extruded, and the pressure detected by a pressure sensor disposed at the inlet side of the gear pump is fed back to control the rotational speed of the screw in order to attain the target inlet pressure.

PATENT DOCUMENT 2 discloses a gear pump extruding machine in which a single pin is disposed in the flow channel between the extruder and the gear pump, the single pin being movable forward and rearward from the flow channel.

### DISCLOSURE OF THE INVENTION

### Problem to be solved by the Invention

The screw feeder feeds a viscous material while kneading the same upon rotation of the screw. When the screw rotates, it exerts a shear stress on the viscous material, causing the viscous material to generate heat and to be plasticized (due to the warming thereof) for better processability. However, since heating occurs entirely in the elongate tubular casing of the screw feeder, the warming tends to be excessive.

Providing the rotational speed of the screw of the screw feeder is controlled in order to change the rate at which the rubber material is extruded, as described above, particularly when the screw is accelerated in rotation, the warming is likely to become more excessive. Then, if the viscous material is an unvulcanized rubber material, the rubber material will be vulcanized to an excessive degree, tending to become lower in quality.

According to the present invention, attention is focused on the fact that the pressure in the fluid communication channel that keeps the screw feeder and the gear pump in the fluid communication with each other, i.e., the pressure on the inlet side of the gear pump device, can be changed by changing the volume of the fluid communication channel, and the pressure on the inlet side of the gear pump is changed to adjust the rate at which the viscous material is extruded by controlling the volume of the fluid communication channel, rather than controlling the rotational speed of the screw which is liable to make the viscous material warmed excessively.

Therefore, it is an object of the present invention to provide a gear pump extruding machine in which the volume of a fluid communication channel is changed to adjust the rate at which a viscous material is extruded, preventing the viscous material from being warmed excessively at all times.

### Means for solving the Problem

In order to achieve the above object, there is provided in accordance with the present invention a gear pump extruding machine for extruding a viscous material as set out in Claim 1, having a screw feeder including a tubular casing and a screw disposed in the tubular casing, for supplying the viscous material while kneading same upon rotation of the screw, a gear pump including a pair of gears provided on an outlet side of the screw feeder with a fluid communication channel interposed therebetween, to deliver the viscous material with the gears, and a die disposed on an outlet side of the gear pump, for molding and discharging the viscous material, the gear pump extruding machine including protrusive members movable forward and rearward to protrude into the fluid communication channel which keeps the screw feeder and the gear pump in fluid communication with each other, to thereby change the volume of the fluid communication channel, an actuator for moving the protrusive members forward and rearward in the fluid communication channel, and a controller for controlling the actuator, wherein the controller is operable to control the actuator to move the protrusive members forward and rearward to thereby change the volume of the fluid communication channel in order to set the pressure in the fluid communication channel to a predetermined pressure depending on the rate at which the viscous material is extruded.

With this arrangement, since the pressure in the fluid communication channel is changed when the protrusive members protrude forward and rearward in the fluid communication channel to change the volume of the fluid communication channel, the pressure in the fluid communication channel can be changed to adjust the rate at which the rubber material is extruded, without controlling the rotational speed of the screw of the screw device, by controlling the actuator to control the distance by which the protrusive members protrude in the fluid communication channel. Productivity is thus increased and the quality of the extruded product is maintained at a high level by avoiding excessive warming of the viscous material.

The viscous material is expected to be warmed adequately due to limited heat generated in the fluid communication channel by the protrusive members protruding into the fluid communication channel, resulting in a contribution to increase in the quality of the extruded product.

According to the present invention, the protrusive members includes a plurality of rod-shaped members extending inward from outside through an outer peripheral wall that defines the fluid communication channel therein and protruding into the fluid communication channel.

With this arrangement, since the rod-shaped members extend inward from outside through the outer peripheral wall that defines the fluid communication channel therein and protrude into the fluid communication channel and move forward and rearward, the rod-shaped members may be moved linearly by the actuator, and may be simplified.

According to the present invention, the rod-shaped members are cylindrical in shape.

With this arrangement, since the rod-shaped members are each cylindrical in shape, the viscous material flowing through the fluid communication channel can flow smoothly without being partially stagnated by the rod-shaped members. The hole extending through the outer peripheral wall as part of the fluid communication channel may be a circular hole. It is thus easy to machine and manufacture the rod-shaped members and the outer peripheral wall.

In an alternative configuration not according to the present invention, the rod-shaped members are disposed in circumferentially equally spaced positions around the fluid communication channel in the outer peripheral wall.

With this arrangement, since the rod-shaped members are circumferentially equally spaced around the fluid communication channel in the outer peripheral wall, the viscous material is prevented from being disturbed and flowing unevenly in the fluid communication channel, but can flow smoothly therein.

According to the present invention, the rod-shaped members are small-diameter slender pins, the pins are arrayed parallel to each other and arranged in a plurality of pin groups, the pin groups being disposed in circumferentially equally spaced positions around the fluid communication channel in the outer peripheral wall that defines the fluid communication channel therein, and the actuator is provided in combination with each of the pin groups for actuating the pins of each of the pin groups in unison with each other.

With this arrangement, the small-diameter slender pins as the rod-shaped members are actuated in unison with each other in each of the pin groups arrayed parallel to each other. Consequently, the mechanism in which the pins are actuated by the actuator is simplified for a reduction in the cost.

The rate of the viscous material that is bitten by the gear teeth of the gears of the gear pump remains essentially unchanged even when the distances by which the pins arranged parallel to each other protrude are changed. Accordingly, the rate at which the viscous material is extruded can be adjusted to a nicety simply by controlling the pressure in the fluid communication channel.

In an embodiment of the present invention, the outer peripheral wall that defines the fluid communication channel therein is disposed between the screw feeder and the gear pump, and the actuator for moving the protrusive members forward and rearward in the fluid communication channel is disposed outwardly of the outer peripheral wall, thereby obtaining a preferable overall arrangement.

Furthermore, the protrusive members include a first pair of pin groups facing each other in a diametrical direction across the fluid communication channel and a second pair of pin groups facing each other in another diametrical direction across the fluid communication channel, and the controller includes a system for limiting the distances by which the second pair of pin groups move forward and protrude so as not to obstruct the first pair of pin groups as the first pair of pin groups move forward and protrude, thereby avoiding the pin groups from physically interfering with each other when the pin groups are moved forwardly.

### Effects of the Invention

According to the present invention, the controller controls the actuator to control the distance by which the protrusive members protrude in the fluid communication channel to thereby change the pressure in the fluid communication channel so as to adjust the rate at which the viscous material is extruded, while avoiding excessive warming of the viscous material which would otherwise be caused by controlling the rotational speed of the screw of the screw device.

### BRIEF DESCRIPTION OF THE DRAWINGS

FIG. 1 is a schematic view of a gear pump extruding machine according to an embodiment of the present invention;
FIG. 2 is a cross-sectional view of the gear pump extruding machine, taken along line II-II of FIG. 1;
FIG. 3 is a cross-sectional view illustrating the gear pump extruding machine in another state;
FIG. 4 is a graph illustrating changes in pressure in a fluid communication channel with respect to changes in volume of the fluid communication channel; and
FIG. 5 is a graph illustrating changes in extrusion efficiency of a gear pump with respect to changes in volume of the fluid communication channel.

### BEST MODE FOR CARRYING OUT THE INVENTION

An embodiment of the present invention will be described below with reference to the drawings.

A gear pump extruding machine 1 according to the present embodiment serves to extrusion-mold a ribbon strip in the form of a narrow web for manufacturing a tire component.

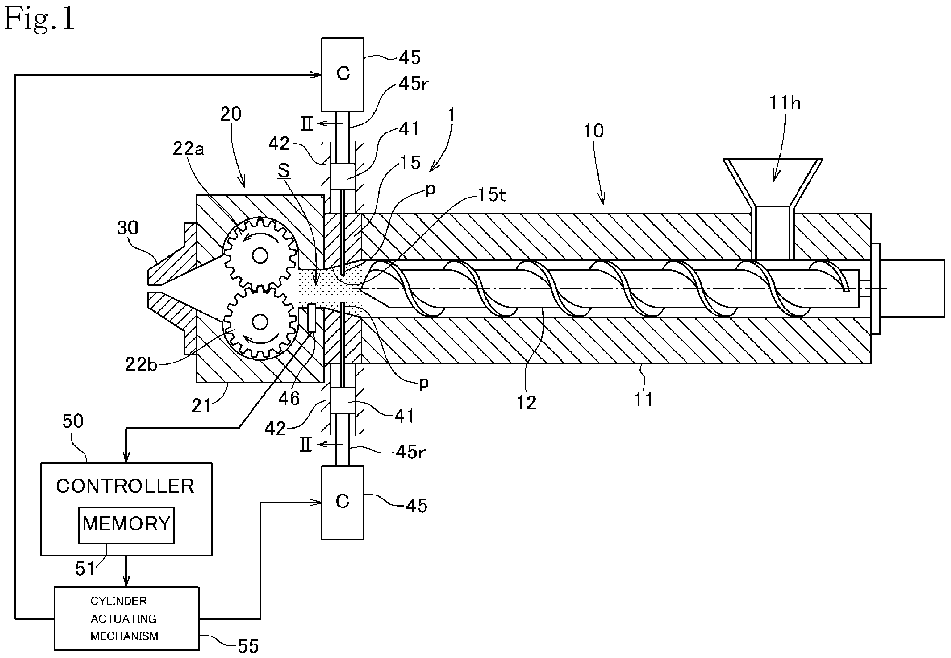

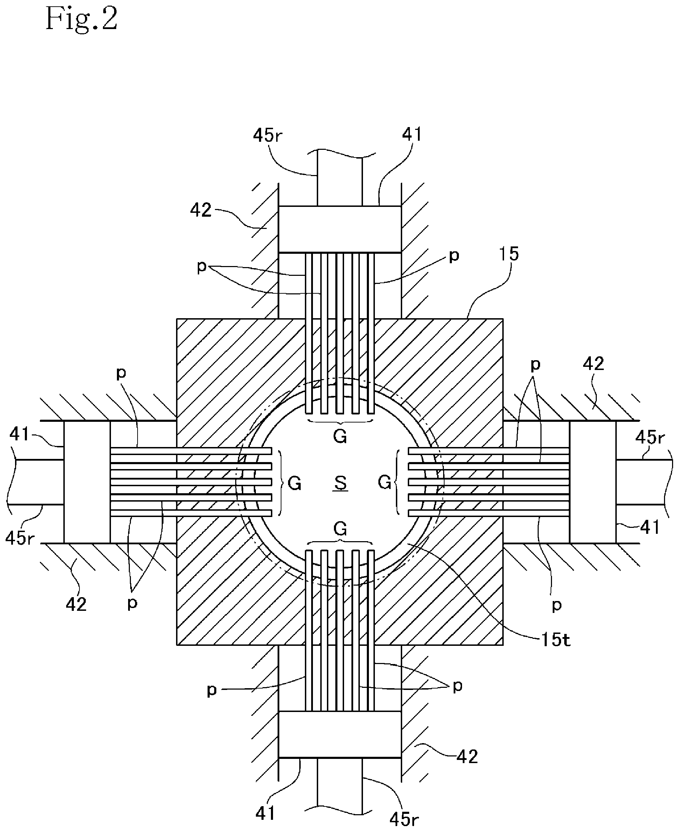

FIG. 1 is a schematic view of the entirety of the gear pump extruding machine 1, and FIG. 2 is a cross-sectional view of the gear pump extruding machine taken along line II-II of FIG. 1.

As illustrated in FIG. 1, the gear pump extruding machine 1 includes a screw feeder 10, a gear pump 20, and a die 30 that are successively arranged in the direction along which a rubber material as a viscous material flows.

The screw feeder 10 supplies the rubber material to the gear pump 20 while kneading the same in an elongate tubular casing 11 upon rotation of an elongate screw 12 therein. The tubular casing 11 of the screw feeder 10 has a hopper 11h provided on an upstream side thereof, through which the rubber material as the viscous material is introduced into the tubular casing 11.

The gear pump 20 includes a pair of upper and lower gears 22a and 22b held in mesh with each other and fitted in a gear pump case 21. The gear pump 20 has an inlet side facing the outlet side of the screw feeder 10. When the pair of upper and lower gears 22a and 22b rotate in respective opposite directions, their gear teeth bite and feed the rubber material supplied from the screw feeder 10 at a constant rate along upper and lower inner peripheral surfaces of the gear pump case 21, and send the rubber material at a constant rate to the die 30 that is provided on the outlet side of the gear pump 20.

The die 30 provided on the outlet side of the gear pump 20 serves to mold the rubber material sent at the constant rate from the gear pump 20 into a predetermined cross-sectional shape and discharge the molded rubber material.

An extruded product extruded and discharged from the die 30 of the gear pump extruding machine is extruded as a ribbon strip in the form of a narrow web.

The gear pump extruding machine 1 includes an outer peripheral wall 15 in the shape of a square outer wall (see FIG. 2) defining therein part of a fluid communication channel S (space illustrated stippled in FIG. 1) that keeps the screw feeder 10 and the gear pump 20 in fluid communication with each other. The outer peripheral wall 15 has an inner peripheral surface that defines a hole with a conical inner surface 15t that is slightly tapered toward the gear pump 20. The outer peripheral wall 15 is a member separate from the screw feeder 10 and the gear pump 20.

As illustrated in FIG. 2, pin groups G, each including an array of parallel slender pins p as small-diameter cylindrical protrusive members, are supported individually on upper, lower, left, and right portions of the square outer wall of the outer peripheral wall 15, and extend inward from respective outer surfaces of the square outer wall through the conical inner surface 15t and protrude into the fluid communication channel S. In the illustrated embodiment, the pin groups G include a pair of vertical pin groups G that face each other vertically and a pair of lateral pin groups G that face each other horizontally.

The pins p of each of the pin groups G have proximal ends protruding outward of the outer peripheral wall 15 and embedded in a common slider 41 for movement in unison with each other. The slider 41 is slidingly translated in a rectangular tubular body 42 for moving the pins p of each of the pin groups G altogether forward and rearward in the fluid communication channel S.

The pins p moving with their proximal ends embedded in the sliders 41 are provided as mechanisms of the respective pin groups G that are disposed at four circumferentially equally spaced positions around the fluid communication channel S, so that the sliders 41 are slidable radially of the fluid communication channel S in respective upward, downward, leftward, and rightward directions. The sliders 41 are fixed to the distal ends of respective piston rods 45r of hydraulic cylinders 45 (FIG. 1). When the hydraulic cylinders 45 are actuated, their piston rods 45r move the sliders 41 slidingly din the radial directions.

Therefore, when the sliders 41 are slid in the radial directions by the actuated hydraulic cylinders 45, the pins p whose proximal ends are embedded in the sliders 41 are moved back and forth in the fluid communication channel S.

The distance by which the pins p of the pin groups G protrude into the fluid communication channel S can be changed by controlling the hydraulic cylinders 45 in operation to control the back-and-forth movement of a cylinder rod 35r.

When the pins p move forward to protrude into the fluid communication channel S, the volume V of the fluid communication channel S is reduced by the distance by which the pins p move forward to protrude into the fluid communication channel S. Therefore, when the pins p of the four pin groups G protrude into the fluid communication channel S, the volume V of the fluid communication channel S is reduced by the total of the distances by which the pins p of the pin groups G move forward to protrude into the fluid communication channel S. In other words, the volume V of the fluid communication channel S is changed by the distances by which the pins p of the four pin groups G move forward to protrude into the fluid communication channel S.

Providing the volume V of the fluid communication channel S is constant, if the gear pump extruding machine 1 is in steady operation, making the rotational speed of the screw 12 of the screw feeder 10 constant and also making the rotational speed of the gears 22a and 22b of the gear pump 20 constant, then the pressure in the fluid communication channel S through which the rubber material flows is of a value determined by the quality of the rubber material.

If the distances by which the pins p of the four pin groups G protrude into the fluid communication channel S are changed when the gear pump extruding machine 1 is in steady operation, to thus change the volume V of the fluid communication channel S, the pressure in the fluid communication channel S is also changed.

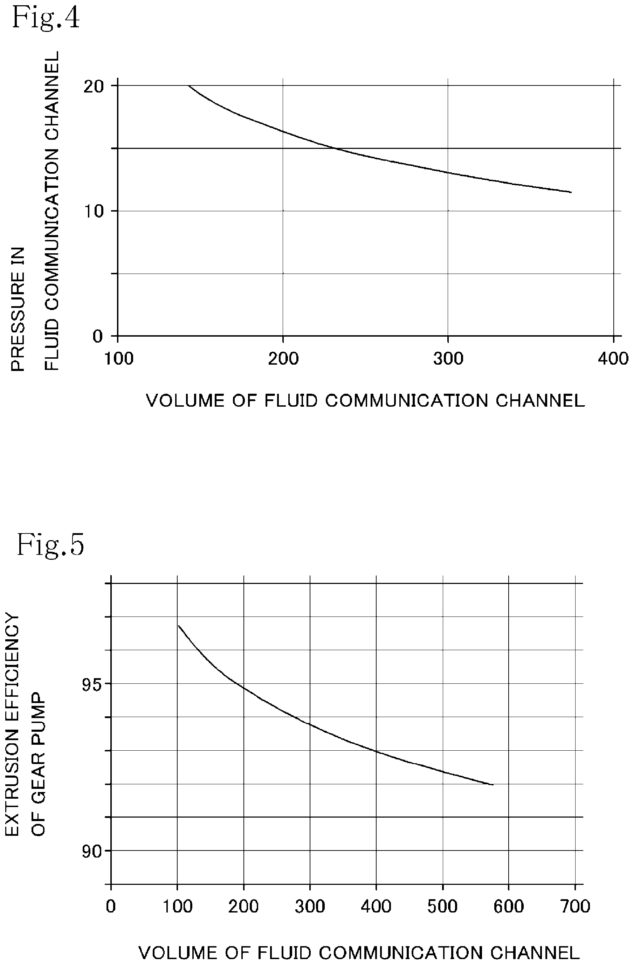

FIG. 4 is a graph illustrating changes in the pressure Ps in the fluid communication channel S with a rubber material of certain quality flowing therethrough, when the distances by which the pins p protrude into the fluid communication channel S are changed to vary the volume V of the fluid communication channel S, while the screw 12 of the screw feeder 10 and the gears 22a and 22b of the gear pump 20 are rotating at respective predetermined rotational speeds.

The graph has a horizontal axis representing the volume V (cm³) of the fluid communication channel S and a vertical axis the pressure Ps (MPa) in the fluid communication channel S. As the distances by which the pins p protrude into the fluid communication channel S increase, the volume V of the fluid communication channel S represented by the horizontal axis decreases, and as the volume V of the fluid communication channel S decreases, the pressure Ps in the fluid communication channel S increases as illustrated in FIG. 4.

Since the pressure in the fluid communication channel S is the same as the pressure on the inlet side of the gear pump 20, the pressure on the inlet side of the gear pump 20 is changed by controlling the distances by which the pins p protrude into the fluid communication channel S to change the volume V of the fluid communication channel S, thereby changing the gear pump extrusion efficiency Ep to adjust the rate at which the rubber material is extruded from the die 30 of the gear pump extruding machine 1.

FIG. 5 is a graph illustrating changes in the gear pump extrusion efficiency Ep (%) at the time the volume V (cm³) of the fluid communication channel S is changed. The graph has a horizontal axis representing the volume V of the fluid communication channel S and a vertical axis the gear pump extrusion efficiency Ep.

As the distances by which the pins p protrude into the fluid communication channel S increase and the volume V of the fluid communication channel S decreases, the pressure Ps in the fluid communication channel S increases, whereby the gear pump extrusion efficiency Ep is increased.

Consequently, as the volume V of the fluid communication channel S decreases, the pressure Ps in the fluid communication channel S increases thereby to increase the gear pump extrusion efficiency Ep, increasing the rate at which the rubber material is extruded.

Referring to FIG. 1, the four hydraulic cylinders 45 are actuated by a cylinder actuating mechanism 55, which is controlled by a controller 50.

A pressure sensor 46 is inserted into the fluid communication channel S that keeps the screw feeder 10 and the gear pump 20 in fluid communication with each other. A detection signal that is detected by the pressure sensor 46 as indicative of the pressure in the fluid communication channel S is input to the controller 50.

The controller 50 includes a memory 51 storing data which represent the results of preliminarily conducted measurements of the relationship between pressures in the fluid communication channel S and rates at which rubber materials are extruded.

When a rate at which a rubber material is to be extruded from the gear pump extruding machine 1 is determined from the speed of a line in which the gear pump extruding machine 1 is incorporated, the pressure in the fluid communication channel S corresponding to the determined rate is extracted from the data stored in the memory 51 in advance and established as a target pressure.

The controller 50 controls the cylinder actuating mechanism 55 to actuate the four hydraulic cylinders 45 to adjust the distances by which the pins p protrude into the fluid communication channel S, so that the pressure in the fluid communication channel S will reach the target pressure.

Specifically, the controller 50 reads the pressure in the fluid communication channel S that is detected by the pressure sensor 46, compares the detected pressure with the target pressure, and feedback-controls the cylinder actuating mechanism 55 to adjust the distances by which the pins p protrude into the fluid communication channel S, i.e., the volume V of the fluid communication channel S, in order to make the detected pressure closer to the target pressure.

FIG. 2 illustrates the gear pump extruding machine 1 in a state in which the distances by which the pins p protrude into the fluid communication channel S are small. The pins p of the upper, lower, left, and right pin groups G have their distal ends protruding slightly into the fluid communication channel S, so that the fluid communication channel S is open largely in its central region. Therefore, the volume V of the fluid communication channel S is made large.

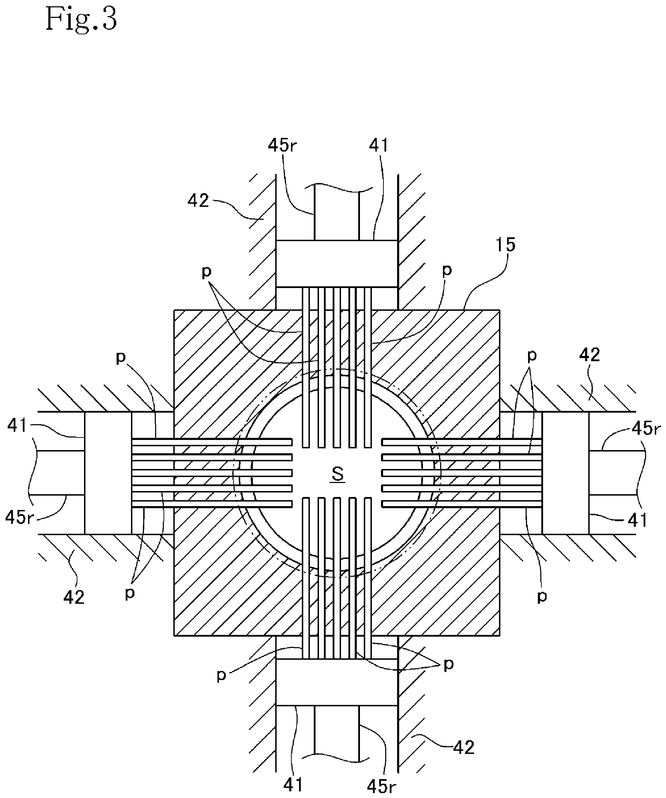

FIG. 3 illustrates the gear pump extruding machine 1 in a state in which the pins p of the upper, lower, left, and right pin groups G have moved forward and protruded largely into the fluid communication channel S from the state illustrated in FIG. 2.

In order to avoid physical interference between the pins p of the upper and lower pin groups G and the pins p of the left and right pin groups G, the pins p of the left and right pin groups G are stopped with appropriate open space left therebetween and the pins p of the upper and lower pin groups G are positioned in the open space. Therefore, the volume V of the fluid communication channel S is small.

Thus, in order to prevent a pair of pin groups G that face each other diametrically across the fluid communication channel S from physically interfering, when moving forward and protruding, with another pair of pin groups G that face each other diametrically across the fluid communication channel S, the controller 50 should preferably include a system for limiting the distances by which the other pair of pin groups G move forward and protrude so as not to obstruct the first-mentioned pair of pin groups G as they move forward and protrude.

By thus controlling the distances by which the pins p protrude into the fluid communication channel S to change the volume V of the fluid communication channel S, the pressure in the fluid communication channel S, i.e., the pressure on the inlet side of the gear pump 20 (the pressure Ps in the fluid communication channel S), is changed to vary the rate at which the rubber material is extruded from the gear pump extruding machine 1. Consequently, the rubber material is not warmed excessively, and the extruded product is of a quality that is maintained at a high level.

Inasmuch as the kneading of the rubber material is promoted by a change in the pressure in the fluid communication channel S which is caused by the pins p protruding into the fluid communication channel S, the rubber material is expected to be warmed adequately due to limited heat generated in the fluid communication channel S, resulting in a contribution to an increase in the quality of the extruded product.

The gear pump extruding machine 1 according to the embodiment of the present invention described in detail above offers the following advantages.

Since the pressure in the fluid communication channel S is changed when the distances by which the pins p protrude into the fluid communication channel S are changed to vary the volume V of the fluid communication channel S, the pressure in the fluid communication channel S can be changed to adjust the rate at which the rubber material is extruded, without controlling the rotational speed of the screw 12 of the screw feeder 10, by controlling the cylinder actuating mechanism 55 to control the distances by which the pins p protrude into the fluid communication channel S. Productivity is increased and the quality of the extruded product is maintained at a high level by avoiding excessive warming of the rubber material.

The rubber material is expected to be warmed adequately due to limited heat generated in the fluid communication channel S by the groups of parallel pins p protruding into the fluid communication channel S, resulting in a contribution to an increase in the quality of the extruded product.

Since the pins p extend inward from the outside of the outer peripheral wall 15 around the fluid communication channel S and protrude into the fluid communication channel S, the pins p can be linearly moved by the hydraulic cylinders 45, and the actuating mechanism can be simplified.

Because the pins p are cylindrical in shape each, the rubber member flowing through the fluid communication channel S can flow smoothly without being partially stagnated by the pins p. The hole extending through the outer peripheral wall 15 as part of the fluid communication channel S may be a circular hole. It is thus easy to machine and manufacture the pins p and the outer peripheral wall 15.

Since the pin groups G of the pins p are circumferentially equally spaced around the fluid communication channel S in the outer peripheral wall 15, the rubber material is prevented from being disturbed and flowing unevenly in the fluid communication channel S, but can flow smoothly therein.

The small-diameter slender pins p are actuated in unison with each other in each of the pin groups G arrayed parallel to each other. Consequently, the mechanism in which the pins p are actuated by the hydraulic cylinder 45 is simplified for a reduction in the cost.

The rate of the rubber material that is bitten by the gear teeth of the gears 22a and 22b of the gear pump 20 remains essentially unchanged even when the distances by which the pins p arranged parallel to each other protrude are changed. Accordingly, the rate at which the rubber material is extruded can be adjusted to a nicety simply by controlling the pressure in the fluid communication channel S.

For example, in the present embodiment, the volume V of the fluid communication channel S is changed by controlling the distances by which the groups G of pins p protrude into the fluid communication channel S. However, the volume V of the fluid communication channel S may be changed by controlling the number of pins p that protrude into the fluid communication channel S. According to such a modification, each pin p or pins p of each pin group G is provided with the slider 41 and the hydraulic cylinder 45. If each of pins p is separately slidable, then there are required controls for limiting the distances by which some pins p move forward and protrude in order to avoid physical interference at the time when pins p extending in crossing directions move forward and protrude.

In the present embodiment, the pin groups G each including small-diameter slender pins p arrayed parallel to each other are upper, lower, left, and right pin groups. However, pins p in the form of larger-diameter cylindrical members or prismatic rod-shaped members may be circumferentially equally spaced around the fluid communication channel S in the outer peripheral wall 15 for protrusion into the fluid communication channel S. Furthermore, although the outer peripheral wall 15 is of a square shape in the embodiment, the outer peripheral wall 15 may be of any shape including a circular shape. Although the pins p extending through the outer peripheral wall 15 are provided in the four pin groups G in the embodiment, the number of pin groups G may be less than four or more than four. If the number of pins p and the number of pin groups G are larger, then it is more likely for the distal ends of the pins p to physically interfere with each other when they are moved forward.

In the embodiment, the hydraulic cylinders are used to actuate the protrusive members such as pins p, etc., cylinders such as electromagnetic cylinders other than hydraulic cylinders or electric motors may be used to actuate them.

### [Reference Signs List]

1 · · ·Gear pump extruding machine,
10 · · ·Screw feeder, 11 · · ·Tubular casing, 11h · · ·Hopper, 12 · · ·Screw,
15 · · ·Outer peripheral wall, S · · ·Fluid communication channel, p · · ·Pin, G · · ·Pin group,
20 · · ·Gear pump, 21 · · ·Gear pump case, 22a, 22b · · ·Gear, 30 · · ·Die,
41 · · ·Slider, 45 · · ·Hydraulic cylinder, 46 · · ·Pressure sensor,
50 · · ·Controller, 51 · · ·Memory, 55 · · ·Cylinder actuating mechanism.

## Claims

1. A gear pump extruding machine (1) for extruding a viscous material, having a screw feeder (10) including a tubular casing (11) and a screw (12) disposed in the tubular casing (11), for supplying the viscous material while kneading same upon rotation of the screw (12), a gear pump (20) including a pair of gears (22b) provided on an outlet side of said screw feeder (10) with a fluid communication channel (S) interposed therebetween, for delivering the viscous material with the gears (22b), a die (30) disposed on an outlet side of said gear pump (20), for molding and discharging the viscous material,
protrusive members (p) movable forward and rearward to protrude into said fluid communication channel (S) which keeps said screw feeder (10) and said gear pump (20) in fluid communication with each other, to thereby change said fluid communication channel (S) in volume ;
an actuator (45) for moving said protrusive members (p) forward and rearward in said fluid communication channel (S); and
a controller (50) for controlling said actuator (45),
wherein said controller (50) is operable to control said actuator (45) to move said protrusive members (p) forward and rearward to thereby change the volume of said fluid communication channel (S) in order to set the pressure in said fluid communication channel (S) to a predetermined pressure depending on the rate at which said viscous material is extruded,
wherein said protrusive members (p) include a plurality of rod-shaped members (p) which are cylindrical in shape extending inward from outside through an outer peripheral wall (15) that defines said fluid communication channel (S) therein and protruding into said fluid communication channel (S), wherein:
said rod-shaped members (p) are small-diameter slender pins;
said pins are arrayed parallel to each other and arranged in a plurality of pin groups (G), said pin groups (G) being disposed in circumferentially equally spaced positions around said fluid communication channel (S) in said outer peripheral wall (15) defining said fluid communication channel (S) therein; and
said actuator (45) is provided in combination with each of said pin groups (G) for actuating the pins of each of the pin groups (G) in unison with each other.

2. The gear pump extruding machine (1) according to claim 1, wherein said outer peripheral wall (15) defining said fluid communication channel (S) therein is disposed between said screw feeder (10) and said gear pump (20), and said actuator (45) for moving said protrusive member forward and rearward in said fluid communication channel (S) is disposed outwardly of said outer peripheral wall (15).

3. The gear pump extruding machine (1) according to claim 1, wherein said protrusive members (p) include a first pair of pin groups (G) facing each other in a diametrical direction across said fluid communication channel (S) and a second pair of pin groups (G) facing each other in another diametrical direction across said fluid communication channel (S), and said controller (50) includes a system for limiting the distances by which the second pair of pin groups (G) move forward and protrude so as not to obstruct the first pair of pin groups (G) as the first pair of pin groups (G) move forward and protrude.

## Patentansprüche

1. Zahnradpumpen-Extrudiermaschine (1) zum Extrudieren eines viskosen Materials, die Folgendes aufweist: einen Schneckenaufgeber (10), der ein röhrenförmiges Gehäuse (11) und eine Schnecke (12), die in dem röhrenförmigen Gehäuse (11) angeordnet ist, zum Zuführen des viskosen Materials, während dasselbe auf eine Drehung der Schnecke (12) hin geknetet wird, eine Zahnradpumpe (20), die ein Paar von Zahnrädern (22b) einschließt, die auf einer Auslassseite des Schneckenaufgebers (10) mit einem dazwischen eingefügten Fluidverbindungskanal (S) zum Zuführen des viskosen Materials mit den Zahnrädern (22b) bereitgestellt werden, ein Formwerkzeug (30), das auf einer Auslassseite der Zahnradpumpe (20) angeordnet ist, zum Formen und Ausstoßen des viskosen Materials,
vorstehende Elemente (p), die nach vorn und nach hinten beweglich sind, um in den Fluidverbindungskanal (S), der den Schneckenaufgeber (10) und die Zahnradpumpe (20) in Fluidverbindung miteinander hält, vorzustehen, um dadurch den Fluidverbindungskanal (S) im Volumen zu verändern,
einen Stellantrieb (45) zum Bewegen der vorstehenden Elemente (p) in dem Fluidverbindungskanal (S) nach vorn und nach hinten und
eine Steuerung (50) zum Steuern des Stellantriebs (45),
wobei die Steuerung (50) funktionsfähig ist, um den Stellantrieb (45) zu steuern, um die vorstehenden Elemente (p) nach vorn und nach hinten zu bewegen, um dadurch das Volumen des Fluidverbindungskanals (S) zu verändern, um in Abhängigkeit von der Geschwindigkeit, mit der das viskose Material extrudiert wird, den Druck in dem Fluidverbindungskanal (S) auf einen vorbestimmten Druck einzustellen,
wobei die vorstehenden Elemente (p) mehrere stabförmige Elemente (p) einschließen, die eine zylindrische Form haben, wobei sie sich von außen nach innen durch eine äußere Umfangswand (15), die den Fluidverbindungskanal (S) in derselben definiert, erstrecken und in den Fluidverbindungskanal (S) vorstehen, wobei:
die stabförmigen Elemente (p) Stifte mit kleinem Durchmesser sind,
die Stifte parallel zueinander gruppiert und in mehreren Stiftgruppen (G) angeordnet sind, wobei die Stiftgruppen (G) in umlaufend gleich beabstandeten Positionen um den Fluidverbindungskanal (S) in der äußeren Umfangswand (15), die den Fluidverbindungskanal (S) definiert, angeordnet sind, und
der Stellantrieb (45) in Kombination mit jeder der Stiftgruppen (G) zum Betätigen der Stifte jeder der Stiftgruppen (G) im Gleichtakt miteinander bereitgestellt wird.

2. Zahnradpumpen-Extrudiermaschine (1) nach Anspruch 1, wobei die äußere Umfangswand (15), die den Fluidverbindungskanal (S) in derselben definiert, zwischen dem Schneckenaufgeber (10) und der Zahnradpumpe (20) angeordnet ist und der Stellantrieb (45) zum Bewegen des vorstehenden Elements in dem Fluidverbindungskanal (S) nach vorn und nach hinten außerhalb der äußeren Umfangswand (15) angeordnet ist.

3. Zahnradpumpen-Extrudiermaschine (1) nach Anspruch 1, wobei die vorstehenden Elemente (p) ein erstes Paar von Stiftgruppen (G), die einander in einer diametralen Richtung über den Fluidverbindungskanal (S) gegenüberliegen, und ein zweites Paar von Stiftgruppen (G), die einander in einer anderen diametralen Richtung über den Fluidverbindungskanal (S) gegenüberliegen, einschließen und die Steuerung (50) ein System zum Begrenzen der Strecken, um die sich das zweite Paar von Stiftgruppen (G) nach vorn bewegt und vorsteht, einschließt, um das erste Paar von Stiftgruppen (G) nicht zu behindern, wenn sich das erste Paar von Stiftgruppen (G) nach vorn bewegt und vorsteht.

## Revendications

1. Extrudeuse à pompe à engrenages (1) pour l'extrusion d'un matériau visqueux, comportant un alimentateur à vis (10) incluant un boîtier tubulaire (11) et une vis (12) disposée dans le boîtier tubulaire (11), pour assurer l'alimentation du matériau visqueux tout en le malaxant lors de la rotation de la vis (12), une pompe à engrenages (20) incluant une paire d'engrenages (22b) agencée sur un côté de sortie dudit alimentateur à vis (10), un canal à communication de fluide (S) étant agencé entre eux, pour délivrer le matériau visqueux par les engrenages (22b), et une matrice (30) disposée sur un côté de sortie de ladite pompe à engrenages (20), pour mouler et décharger le matériau visqueux ;
des éléments en saillie (p) pouvant se déplacer vers l'avant et vers l'arrière pour faire saillie dans ledit canal à communication de fluide (S), maintenant une communication de fluide entre ledit alimentateur à vis (10) et ladite pompe à engrenages (20), afin de changer ainsi le volume dudit canal à communication de fluide (S) ;
un actionneur (45) pour déplacer lesdits éléments en saillie (p) vers l'avant et vers l'arrière dans ledit canal à communication de fluide (S) ; et
un moyen de commande (50) pour contrôler ledit actionneur (45) ;
dans laquelle ledit moyen de commande (50) sert à contrôler ledit actionneur (45) afin de déplacer lesdits éléments en saillie (p) vers l'avant et vers l'arrière, pour changer ainsi le volume dudit canal à communication de fluide (S) en vue de régler la pression dans ledit canal à communication de fluide (S) à une pression prédéterminée en fonction de la vitesse d'extrusion dudit matériau visqueux ;
dans laquelle lesdits éléments en saillie (p) incluent plusieurs éléments en forme de tige (p) ayant une forme cylindrique et s'étendant vers l'intérieur à partir de l'extérieur à travers une paroi périphérique externe (15), y définissant ledit passage à communication de fluide (S) et faisant saillie dans ledit canal à communication de fluide (S) ; dans laquelle :
lesdits éléments en forme de tige (p) sont des broches effilées à diamètre réduit ;
lesdites broches sont agencées parallèlement les unes aux autres dans plusieurs groupes de broches (G), lesdits groupes de broches (G) étant disposés dans des positions à espacement circonférentiel égal autour dudit canal à communication de fluide (S) dans ladite paroi périphérique externe (15), y définissant ledit canal à communication de fluide (S) ; et
ledit actionneur (45) est agencé en combinaison avec chacun desdits groupes de broches (G) pour actionner les broches de chacun des groupes de broches (G) à l'unisson les uns avec les autres.

2. Extrudeuse à pompe à engrenages (1) selon la revendication 1, dans laquelle ladite paroi périphérique externe (15), y définissant ledit canal à communication de fluide (S) est disposée entre ledit alimentateur à vis (10) et ladite pompe à engrenages (20), ledit actionneur (45) servant à déplacer ledit élément en saillie vers l'avant et vers l'arrière dans ledit canal à communication de fluide (S) étant disposé vers l'extérieur de ladite paroi périphérique externe (15).

3. Extrudeuse à pompe à engrenages (1) selon la revendication 1, dans laquelle lesditts éléments en saillie (p) incluent une première paire de groupes de broches (G) se faisant face l'un l'autre dans une direction diamétrale à travers ledit canal à communication de fluide (S), et une deuxième paire de groupes de broches (G) se faisant face l'un l'autre dans une autre direction diamétrale à travers ledit canal à communication de fluide (S), ledit moyen de commande (50) incluant un système pour limiter les distances de déplacement vers l'avant et de saillie de la deuxième paire de groupes de broches (G), de manière à ne pas obstruer la première paire de groupes de broches (G) lors du déplacement vers l'avant et de la saillie de la première paire de groupes de broches (G).
